Europäisches Patentamt

European Patent Office

Office européen des brevets

(11) Veröffentlichungsnummer: **0 299 151 B1**

# EUROPÄISCHE PATENTSCHRIFT

(45) Veröffentlichungstag der Patentschrift: **04.12.91**

(51) Int. Cl.5: **B60Q 1/56**, B60Q 1/26

(21) Anmeldenummer: **88106188.1**

(22) Anmeldetag: **19.04.88**

(54) **Mehrkammerleuchte mit einem Kennzeichenschildhalter.**

(30) Priorität: **11.07.87 DE 3723029**

(43) Veröffentlichungstag der Anmeldung:
**18.01.89 Patentblatt 89/03**

(45) Bekanntmachung des Hinweises auf die
Patenterteilung:
**04.12.91 Patentblatt 91/49**

(84) Benannte Vertragsstaaten:
**AT ES FR GB IT SE**

(56) Entgegenhaltungen:

| CH-A- 144 453 | DE-A- 2 450 239 |
| DE-A- 2 627 497 | DE-A- 2 902 921 |
| DE-A- 3 503 585 | FR-A- 2 061 227 |
| FR-A- 2 436 693 | FR-A- 2 507 980 |
| GB-A- 1 448 675 | US-A- 1 922 617 |

(73) Patentinhaber: **Hella KG Hueck & Co.**
**Postfach 28 40**
**W-4780 Lippstadt(DE)**

Patentinhaber: **MERCEDES-BENZ AKTIENGE-**
**SELLSCHAFT**
**Postfach 60 02 02**
**W-7000 Stuttgart 60(DE)**

(72) Erfinder: **Kresse, Franz**
**Nachtigallenstrasse 15**
**W-4780 Lippstadt-Lipperode(DE)**
Erfinder: **Kolb, Wolfgang**
**Talstrasse 43**
**W-7000 Stuttgart 1(DE)**
Erfinder: **Greiner, Siegfried**
**Hasenäckerstrasse 29**
**W-7057 Leutenbach 2(DE)**

## Beschreibung

Die Erfindung bezieht sich auf eine Mehrkammerleuchte, mit einem Kennzeichenschildhalter für den Anbau an der Heckseite eines Fahrzeugs, mit einem aus Kunststoff hergestellten Gehäuse, in das die von einer Lichtscheibe abgedeckten Reflektoren eingesetzt sind und an das in Anbaulage der Mehrkammerleuchte an der unteren Seite die plattenförmige Halterung für ein Kennzeichenschild angeformt ist.

Eine solche Mehrkammerleuchte mit Kennzeichenschildhalterung ist aus dem DE-GM 19 13 196 bekannt. In der Anbaulage der Mehrkammerleuchte ist an die untere Seite ihres Gehäuses eine kastenförmige Kennzeichenschildhalterung angeformt. Der Boden der kastenförmigen Halterung liegt in einer Ebene mit dem Boden des Gehäuses der Mehrkammerleuchte. Die obere Seitenwandung der kastenförmigen Halterung wird von der unteren Seitenwandung des Gehäuses gebildet. In die untere Seitenwandung des Gehäuses ist die Lichtscheibe für das Kennzeichenschild eingesetzt, das mit seinem oberen Rand an dem Boden der kastenförmigen Halterung und mit seinem unteren Rand an dem freien Rand der unteren Seitenwandung der kastenförmigen Halterung befestigt ist. Durch diese schräge Lage ist das Kennzeichenschild zur Lichtscheibe hin ausgerichtet und ist somit gut ausgeleuchtet. Die Mehrkammerleuchte mit der Kennzeichenschildhalterung weist wegen der Kastenform der Kennzeichenschildhalterung eine ausreichend große Verwindungssteifigkeit auf, jedoch ist wegen der relativ hohen seitlichen Seitenwandungen der kastenförmigen Kennzeichenschildhalterung das Kennzeichenschild von der Seite her nicht zu sehen. Soll letzteres möglich sein, so müßte bei einem Wegfall der beiden seitlichen Seitenwandungen und bei einer möglichst flach bauenden Kennzeichenschildhalterung an seine Rückseite Versteifungsrippen angeformt sein, die sich bis zur Rückseite des Gehäuses hin erstrecken. Bei Versteifungsrippen besteht jedoch wegen scharfer Kanten Verletzungsgefahr. Außerdem kann eine Leuchte mit äußeren Versteifungsrippen sehr schnell verschmutzen und ist sehr schlecht zu säubern.

Aufgabe der Erfindung ist es, die im Gattungsbegriff beschriebene Mehrkammerleuchte mit einer Kennzeichenschildhalterung derart auszubilden, daß das Kennzeichenschild von der Seite her zu sehen ist und dabei die Kennzeichenschildhalterung möglichst flach baut. Darüber hinaus sollen die Außenflächen des Gehäuses und der Kennzeichenschildhalterung auch bei dünnen Wandungen möglichst glatt sein. Ferner soll die Mehrkammerleuchte mit der Kennzeichenschildhalterung auch bei sehr großen Außenmaßen eine ausreichend große Verwindungssteifigkeit aufweisen, ohne daß ein qualitativ sehr hochwertiger und damit sehr teurer Kunststoff verwendet werden muß. Diese Aufgabe wird nach der Erfindung durch folgende Merkmale gelöst.

a) die obere und die beiden seitlichen Seitenwandungen des Gehäuses sind doppelwandig ausgeführt,

b) der äußere Teil der Doppelwandung und die untere Seitenwandung des Gehäuses ist an der plattenförmigen Kennzeichenschildhalterung angebunden,

c) der freie Rand des äußeren Teils der Doppelwandung und die Rückseite der plattenförmigen Kennzeichenschildhalterung liegen etwa in einer Ebene,

d) der freie Rand der Doppelwandung ist durch einen plattenförmigen Deckel abgedeckt, der sich auch über die Rückseite der plattenförmigen Kennzeichenschildhalterung erstreckt und an dieser anliegt.

Hierbei kann die Außenseite des äußeren Teils der Doppelwandung frei von Einfallstellen sein, da an die Innenseite des äußeren Teils der Doppelwandungen keine Verdickung wie z. B. Ansätze und Versteifungsrippen angeformt sein müssen.

Weiterhin ist es vorteilhaft, wenn die Innenseite des Deckels und die Rückseite des Gehäuses und/oder des Kennzeichenschildhalters teleskopartig ineinandergreifende zylinderförmige Zapfen aufweisen, wobei die Zapfen des Deckels hohlzylinderförmig ausgeführt sind und die in diese Zapfen eingreifenden Zapfen des Gehäuses und/oder des Kennzeichenschildhalters mit dem Deckel befestigt sind. Durch die teleskopartig ineinandereingreifenden Ansätze ist nicht nur der Deckel an dem Gehäuse und der Kennzeichenschildhalterung festgesetzt, sondern durch sie erhöht sich auch die Festigkeit und Steifigkeit des Gehäuses mit dem Kennzeichenschildhalter. Hierbei ist es weiterhin vorteilhaft, wenn die Befestigung des Deckels durch in die zylinderförmigen Zapfen des Gehäuses und/oder des Kennzeichenschildhalters eingreifende Schrauben erfolgt, deren Kopf an der Außenseite des Deckels anliegt. Bei einer anderen vorteilhaften Befestigung des Deckels sind die Stirnflächen der zylinderförmigen Zapfen des Gehäuses und/oder des Kennzeichenschildhalters direkt mit dem Deckel oder mit den Deckel hintergreifende Scheibchen verschweißt, die in eine Vertiefung an der Außenseite des Deckels eingesetzt sind und mit ihrer Außenfläche bündig mit der Außenfläche des Deckels verlaufen. Eine solche unlösbare Verbindung ist sehr sicher und der Deckel weist eine Außenseite ohne Vertiefungen und Erhöhungen auf.

Ein weiterer Vorteil ist es, wenn die Mehrkammerleuchte in den Boden des Gehäuses eingesetzte Befestigungsschrauben aufweist, an deren Durchgangslöcher angrenzende Bereiche auf der Rückseite des Gehäuses Versteifungsrippen angeformt sind, und die Durchgangslöcher für die Befestigungsschrauben auf der Rückseite des Gehäuses von jeweils einer angeformten Hülse umgeben sind, an deren Mantelfläche die Versteifungsrippen angeformt sind, die radial nach außen verlaufen und mit ihrer dem Deckel zugewandten Schmalseite an der Innenseite des Deckels anliegen. Dadurch ist sowohl die Aufnahme der Befestigungsschrauben in dem Gehäuse als auch die von der Außenseite des Deckels gebildete Anlagefläche für die Karosserie sehr stabil.

Ebenfalls ist es vorteilhaft, wenn die Auflagefläche für das Kennzeichenschild in einer in Anbaulage der Leuchte senkrecht stehenden Ebene liegt, die in einem Abstand hinter dem Boden des Gehäuses verläuft, und wenn die ein eingesetztes Lichtfenster für das Kennzeichenschild aufweisende untere Seitenwandung des Gehäuses etwa rechtwinklig zur Anlagefläche für das Kennzeichenschild steht. Bei einer solchen Lösung ist eine ausreichende Ausleuchtung des Kennzeichenschildes möglich, da die Lichtstrahlen in einem ausreichend großen Winkel auf das Kennzeichenschild auftreffen.

Vorteilhaft ist es weiterhin, wenn der Übergang des äußeren und inneren Teils der Doppelwandung des Gehäuses von einer Wulst gebildet ist, die die Lichtscheibe nach vorne hin überragt und die untere Seitenwandung des Gehäuses nach unten hin überragt. Eine solche Wulst dient sowohl zum Schutz der Lichtscheibe gegen Beschädigungen als auch als Zierrahmen für die Lichtscheibe. Hierbei ist es weiterhin vorteilhaft, wenn die Wulst des Gehäuses in eine die Kennzeichenschildhalterung umgebende Wulst übergeht. Diese als Schutz und Zierrahmen für das Kennzeichenschild dienende Wulst trägt außerdem zur Erhöhung der Verwindungssteifigkeit der Kennzeichenschildhalterung bei.

In den Patentansprüchen 13 bis 22 sind weitere zweckmäßige Ausführungsformen von Einzelheiten der Mehrkammerleuchte gemäß der Erfindung erläutert.

Ein Ausführungsbeispiel nach der Erfindung ist in der Zeichnung dargestellt und zwar zeigt

Figur 1 eine Vorderansicht einer Mehrkammerleuchte mit einer angeformten Kennzeichenschildhalterung,

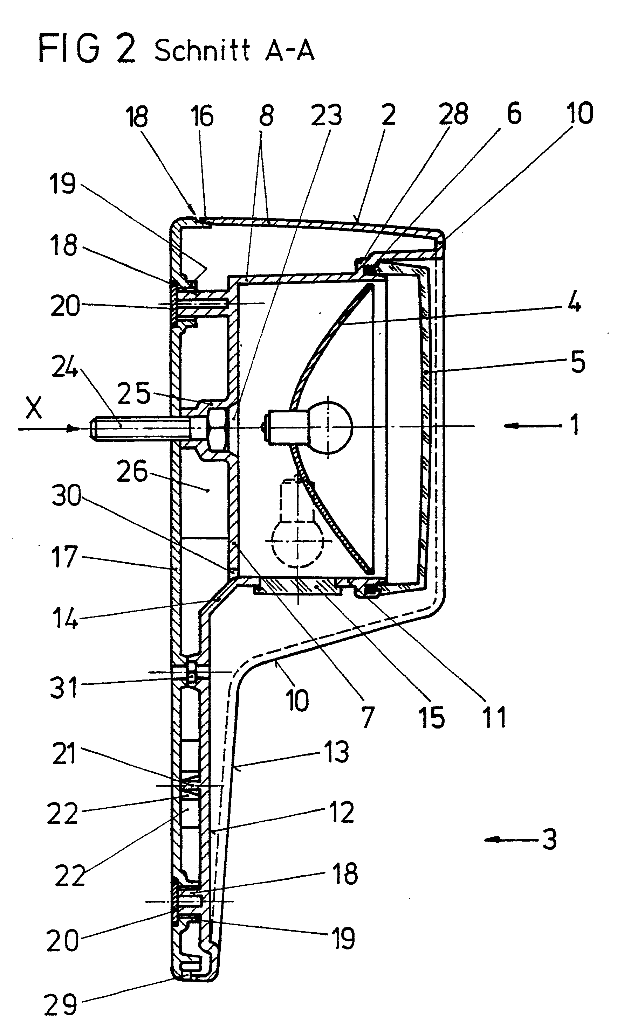

Figur 2 einen Schnitt nach der Linie A-A und

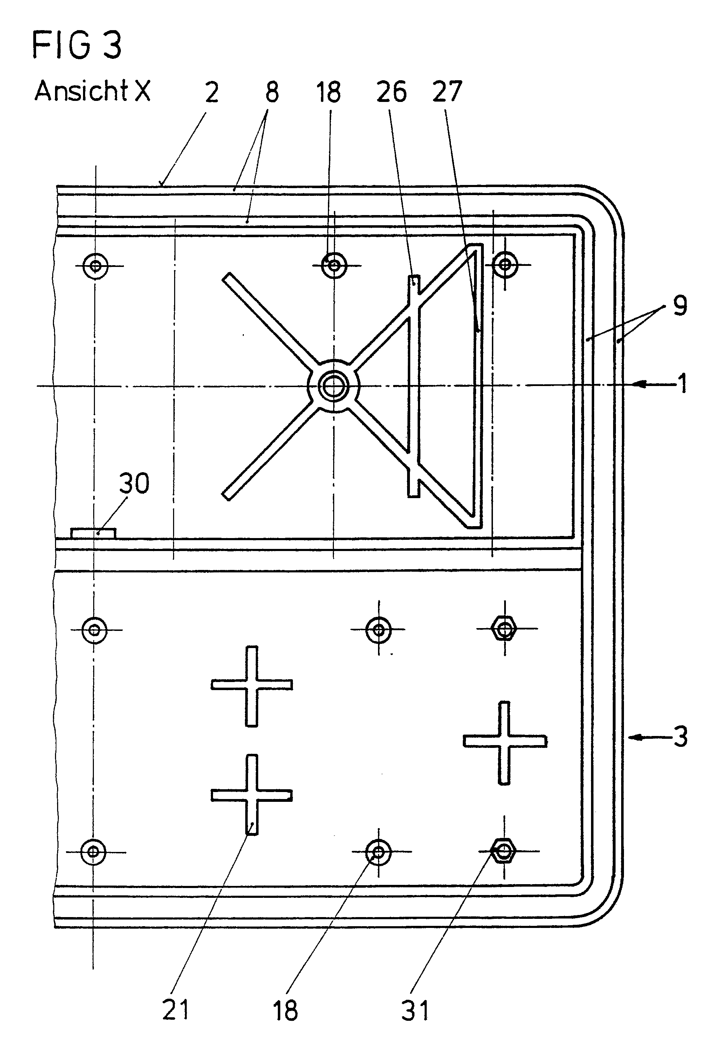

Figur 3 eine Ansicht aus Richtung X auf die Rückseite der Mehrkammerleuchte ohne den Deckel.

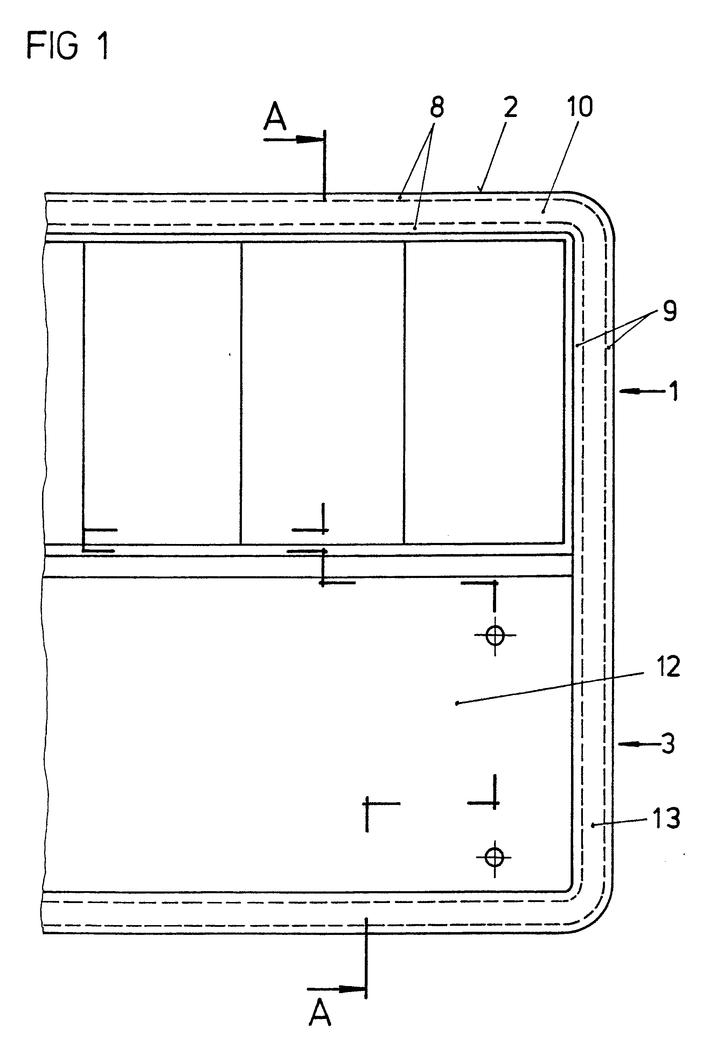

In Figur 1 ist in Anbaulage eine Mehrkammerleuchte (1) mit einer an die untere Seite des aus Kunststoff hergestellten Gehäuses (2) angeformten plattenförmigen Kennzeichenschildhalterung (3) dargestellt.

In das Gehäuse (2) der Mehrkammerleuchte sind von seiner Vorderseite her die Reflektoren (4) eingesetzt, die zusammen mit der sie abdeckenden Lichtscheibe (5) die Leuchtenkammern bilden. Der äußere umlaufende Rand der Lichtscheibe (5) liegt an einer Dichtung (6), die in eine rinnenförmige Vertiefung des Gehäuses (2) eingesetzt ist, an. Die Lichtscheibe (5) und die Reflektoren (4) sind durch in den Boden (7) des Gehäuses (2) eingreifende Schrauben, deren Kopf an der Außenseite der Lichtscheibe (5) anliegt, festgesetzt (in der Zeichnung nicht dargestellt). Die obere (8) und die beiden seitlichen Seitenwandungen (9) des Gehäuses (2) sind doppelwandig ausgeführt. Der Übergang des äußeren und inneren Teils der Doppelwandungen (8 und 9) wird von einer Wulst (10) gebildet, die die Lichtscheibe (5) nach vorne hin und die untere Seitenwandung (11) des Gehäuses (2) nach unten hin überragt. Die Wulst (10) des Gehäuses (2) geht im Bereich der unteren Seitenwandung (11) des Gehäuses (2) in eine die Anlagefläche (12) für ein Kennzeichenschild umgebende Wulst (13) über. Diese Wulst (13) überragt die Anlagefläche (12) für ein Kennzeichenschild nach vorn hin. Die Anlagefläche (12) für ein Kennzeichenschild liegt in einer senkrechten Ebene. Zu dieser Ebene verläuft die untere Seitenwandung (11) des Gehäuses (2) in einem rechten Winkel. Die untere Seitenwandung (11) des Gehäuses (2) und der plattenförmige Kennzeichenschildhalter (3) sind durch einen schräg verlaufenden Wandungsabschnitt (14) verbunden. In einer Öffnung der unteren Seitenwandung (11) ist eine Lichtscheibe (15) für das Kennzeichenschild eingesetzt. Hinter dieser Lichtscheibe und zwischen zwei Reflektoren (4) ist eine Glühlampe zur Beleuchtung des Kennzeichenschildhalters angeordnet. Die senkrecht stehende Ebene in der die Anlagefläche (12) de Kennzeichenschildes liegt, läuft in einem Abstand hinter dem Boden (7) des Gehäuses (2).

An dem freien Rand (16) des äußeren Teils der Doppelwandung (8, 9) und des äußeren Teils der Wulst (13) der Kennzeichenschildhalterung liegt ein Deckel (17) an, der sich über die gesamte Rückseite des Gehäuses (2) und der Kennzeichenschildhalterung (3) erstreckt. Der Deckel (17) weist an seinem äußeren umlaufenden Rand eine den Deckel verjüngende Stufe (18) auf, die an der Innenseite des freien Randes (16) des Gehäuses (2) bzw. des Kennzeichenschildhalters (3) anliegt. An die Innenseite des Deckels (17) und an die Rückseite des Gehäuses (2) und des Kennzeichenschildhalters (3) sind zylinderförmige Ansätze (18, 19) angeformt, die teleskopartig ineinandergreifen. Hierbei sind die zylinderförmigen Ansätze (18) des Gehäuses (2) und des Kennzeichenschildhalters (3) in hohlzylinderförmigen Ansätzen (19) des Deckels (17) angeordnet. Die Stirnflächen der zylinderförmigen Ansätze (18) des Gehäuses (2) und des Kennzeichenschildhalters (3) sind mit einem Scheibchen (20), das in eine Vertiefung auf der Rückseite des Deckels (17) eingesetzt ist, ultraschall verschweißt. Die Stirnfläche des hohlzylinderförmigen Ansatzes (19) des Deckels (17) liegt an der Rückseite des Kennzeichenschildhalters (3) an. An die Rückseite des Kennzeichenschildhalters (3) sind einwandige Kreuze (21) angeformt, die in doppelwandige, an die Innenseite des Deckels (17) angeformte Kreuze (22) eingreifen. Die Kreuze (21, 22), dienen einerseits beim Aufsetzen des Deckels (17) auf das Gehäuses (2) und der Kennzeichenschildhalterung (3) als Einfädelungshilfe für die zylinderförmigen Ansätze (18, 19) und erhöhen andererseits die Verwindungssteifigkeit der Kennzeichenschildhalterung (3). In dem Boden (7) des Gehäuses (2) sind zwei Durchgangslöcher (23) für Befestigungsschrauben (24) der Mehrkammerleuchte angebracht. Auf der Rückseite des Gehäuses (2) sind die Durchgangslöcher (24) von einer an das Gehäuse angeformten Hülse (25) umgeben, die mit ihrer Stirnfläche an der Rückseite des Deckels (17) anliegt. Die Befestigungsschrauben (24) sind von der Innenseite des Gehäuses (2) her mit ihrem Gewindeschaft vorraus in die Durchgangslöcher eingeschoben. Der Sechskantkopf der Befestigungsschrauben (24) ist in dem Durchgangsloch (23) verdrehsicher arretiert. An die Mantelflächen der Hülsen (25) sind radial nach außen verlaufende Versteifungsrippen (26) angeformt, die mit ihrer dem Deckel (17) zugewandten Schmalseite an der Innenseite des Deckels anliegen. Die senkrecht verlaufenden Rippen (27) versteifen die Rückseite des Gehäuses (2) zusätzlich. Das Kennzeichenschild ist an der Anlagefläche (12) der Kennzeichenschildhalterung (3) durch Schrauben (nicht dargestellt) festsetzbar, die in zwischen dem Deckel (17) und der Kennzeichenschildhalterung (3) festgesetzen Muttern (31) eingreifen.

Die Auflagefläche des Gehäuses (2) für die Lichtscheibe (5) bildet die innere Wandung des Gehäuses (2) im Bereich der Wulst (10) durch eine nach innen vorspringende Stufe (28). In die Stufe (28) ist die die Dichtung (6) aufnehmende rinnenförmige Vertiefung eingebracht. Der von dem Deckel (17), dem Gehäuse (2) und der Kennzeichenschildhalterung (3) gebildete Hohlraum steht durch mehrere in die untere Seite des Deckels (17) eingebrachte öffnungen (29) mit der Außenluft und durch mehrere öffnungen (30), die angrenzend in die untere Seitenwandung (11) des Gehäuses (2) in deren Boden (7) eingebracht sind, mit den Leuchtenkammern in Verbindung. Dadurch sind die Leuchtenkammern gegen Schmutz und Spritzwasser geschützt. Die öffnungen (29, 30) dienen sowohl der Belüftung der Leuchtenkammern, als auch als Wasserablauflöcher.

**Patentansprüche**

1. Mehrkammerleuchte mit einem Kennzeichenschildhalter für den Anbau an der Heckseite eines Fahrzeugs, mit einem aus Kunststoff hergestellten Gehäuse, in das die von einer Lichtscheibe abgedeckten Reflektoren eingesetzt sind und an das in Anbaulage der Mehrkammerleuchte an der unteren Seite die plattenförmige Halterung für ein Kennzeichenschild angeformt ist, gekennzeichnet durch folgende Merkmale:

   a) die obere (8) und die beiden seitlichen Seitenwandungen (9) des Gehäuses (2) sind doppelwandig ausgeführt,
   b) der äußere Teil der Doppelwandung (8 und 9) und die untere Seitenwandung (11) des Gehäuses (2) ist an den plattenförmigen Kennzeichenschildhalter (3) angebunden,
   c) der freie Rand (16) des äußeren Teils der Doppelwandung (8, 9) und die Rückseite der plattenförmigen Kennzeichenschildhalterung (3) liegen etwa in einer Ebene,
   d) der freie Rand (16) der Doppelwandung (8,9) ist durch einen plattenförmigen Deckel (17) abgedeckt, der sich auch über die Rückseite der plattenförmigen Kennzeichenschildhalterung (3) erstreckt und an dieser anliegt.

2. Mehrkammerleuchte nach Anspruch 1, dadurch gekennzeichnet, daß die Innenseite des Deckels (17) und die Rückseite des Gehäuses (2) und/oder des Kennzeichenschildhalters (3) teleskopartig ineinandergreifende zylinderförmige Zapfen (18, 19) aufweisen.

3. Mehrkammerleuchte nach Anspruch 2, dadurch gekennzeichnet, daß die Zapfen (19) des Deckels (17) hohlzylinderförmig ausgeführt sind und die in diese Zapfen (19) eingreifenden Zapfen (18) des Gehäuses (2) und/oder des Kennzeichenschildhalters (3) an dem Deckel (17) befestigt sind.

4. Mehrkammerleuchte nach Anspruch 3, dadurch gekennzeichnet, daß in die zylinderförmigen Zapfen (18) des Gehäuses (2) und/oder des Kennzeichenschildhalters (3) Schrauben eingreifen, deren Kopf an der Außenseite des Deckels anliegt.

5. Mehrkammerleuchte nach Anspruch 3, dadurch gekennzeichnet, daß die Stirnflächen der zylinderförmigen Zapfen (18) des Gehäuses (2) und/oder des Kennzeichenschildhalters (3) direkt mit dem Deckel (17) oder mit den Deckel (17) hintergreifende Scheibchen (20) verschweißt sind.

6. Mehrkammerleuchte nach Anspruch 5, dadurch gekennzeichnet, daß die Scheibchen (20) in eine Vertiefung an der Außenseite des Deckels (17) eingesetzt sind und mit ihrer Außenfläche bündig mit der Außenfläche des Deckels (17) verlaufen.

7. Mehrkammerleuchte nach einem der Ansprüche 1 bis 6 dadurch gekennzeichnet, daß die Mehrkammerleuchte (1) in den Boden (7) des Gehäuses (2) eingesetzte Befestigungsschrauben (24) aufweist, an deren Durchgangslöcher (23) angrenzende Bereiche auf der Rückseite des Gehäuses (2) Versteifungsrippen (26) angeformt sind.

8. Mehrkammerleuchte nach Anspruch 7, dadurch gekennzeichnet, daß die Durchgangslöcher (23) für die Befestigungsschrauben (24) auf der Rückseite des Gehäuses (2) von jeweils einer angeformten Hülse (25) umgeben sind, an deren Mantelfläche die Versteifungsrippen (26) angeformt sind, die radial nach außen verlaufen und mit ihrer dem Deckel (17) zugewandten Schmalseite an der Innenseite des Deckels (17) anliegen.

9. Mehrkammerleuchte nach einem der Ansprüche 1 bis 8, dadurch gekennzeichnet, daß die Auflagefläche (12) für das Kennzeichenschild in einer in Anbaulage der Leuchte senkrecht stehenden Ebene liegt, die in einem Abstand hinter dem Boden (7) des Gehäuses (2) verläuft und daß die ein eingesetzes Lichtfenster (15) für das Kennzeichenschild aufweisende untere Seitenwandung (11) des Gehäuses (2) etwa rechtwinklig zur Anlagefläche (12) für das Kennzeichenschild steht.

10. Mehrkammerleuchte nach einem der Ansprüche 1 bis 9, dadurch gekennzeichnet, daß der Übergang des äußeren und inneren Teils der Doppelwandung (8, 9) des Gehäuses (2) von einer Wulst (10) gebildet ist, die die Lichtscheibe (5) nach vorn hin überragt.

11. Mehrkammerleuchte nach Anspruch 10, dadurch gekennzeichnet, daß der Wulst (10) die untere Seitenwandung (11) des Gehäuses (2) nach unten hin überragt.

12. Mehrkammerleuchte nach einem der Ansprüche 1 bis 11, dadurch gekennzeichnet, daß der Wulst (10) des Gehäuses (2) in eine die Kennzeichenschildhalterung umgebende Wulst (13) übergeht.

13. Mehrkammerleuchte nach einem der Ansprüche 1 bis 12, dadurch gekennzeichnet, daß die innere Wandung des Gehäuses eine nach innen vorspringende Stufe (28) aufweist, die als Auflagefläche für die Lichtscheibe (5) dient.

14. Mehrkammerleuchte nach Anspruch 13, dadurch gekennzeichnet, daß die Auflagefläche rinnenförmig vertieft ist und die rinnenförmige Vertiefung als Bett für eine Dichtung (6) dient.

15. Mehrkammerleuchte nach einem der Ansprüche 1 bis 14, dadurch gekennzeichnet, daß in dem von dem Deckel (17) und dem Gehäuse (2) gebildeten Hohlraum ein an dem Deckel (17) befestigter Mehrfachsteckanschluß hineinragt.

16. Mehrkammerleuchte nach einem der Ansprüche 1 bis 15, dadurch gekennzeichnet, daß in dem Hohlraum zwischen der plattenförmigen Kennzeichenschildhalterung (3) und dem Deckel (17) Befestigungsmittel (31) für das Kennzeichenschild angeordnet sind.

17. Mehrkammerleuchte nach Anspruch 16, dadurch gekennzeichnet, daß die Befestigungsmittel (31) aus zwischen Kennzeichenschildhalter und Deckel festgesetzten Muttern bestehen.

18. Mehrkammerleuchte nach einem der Ansprüche 1 bis 17, dadurch gekennzeichnet, daß an die Innenseite des Deckels (17) und an die Rückseite des Gehäuses (2) und/oder des Kennzeichenschildhalters (3) sich kreuzende Wandungen (21 und 22) angeformt sind, die ineinandergreifen.

19. Mehrkammerleuchte nach Anspruch 18, dadurch gekennzeichnet, daß die sich kreuzenden und ineinandergreifenden Wandungen (21 und 22) aus einem zwischen die Wandungen eines doppelwandigen Kreuzes (22) eingesetzten einwandigen Kreuz (21) bestehen.

20. Mehrkammerleuchte nach einem der Ansprüche 1 bis 19, dadurch gekennzeichnet, daß der von dem Deckel (17) und dem Gehäuse (2) mit der Kennzeichenschildhalterung (3) gebildete Hohlraum durch mindestens eine im tiefliegenden Bereich des Hohlraums eingebrachte Öffnung (29) mit der Außenluft und durch mindestens eine Öffnung (30) im Boden (7) des Gehäuses (2) mit den Leuchtenkammern in Verbindung steht.

21. Mehrkammerleuchte nach Anspruch 20, dadurch gekennzeichnet, daß die öffnung (30) im Boden (7) des Gehäuses (2) in den unteren Randbereich des Bodens eingebracht ist.

22. Mehrkammerleuchte nach Anspruch 20 oder 21, dadurch gekennzeichnet, daß an der unteren Seite des Deckels (17) in seinem freien Rand die mit der Außenluft in Verbindung stehende öffnung (29) des Hohlraums eingebracht ist.

## Claims

1. Multichamber light having a licence plate support for mounting on the rear of a vehicle, and a housing produced from plastic, in which the reflectors covered by a transparent pane are inserted and on which the plate-shaped support for a licence plate is integrally formed on the lower side in the mounted position of the multichamber light, characterised by the following features:

   a) the upper (8) and the two lateral side walls (9) of the housing (2) have a double-walled construction,

   b) the outer part of the double wall (8 and 9) and the lower side wall (11) of the housing (2) are fastened to the plate-shaped licence plate support (3),

   c) the free edge (16) of the outer part of the double wall (8, 9) and the rear of the plate-shaped licence plate support (3) lie approximately in one plane,

   d) the free edge (16) of the double wall (8, 9) is covered by a plate-shaped cover (17), which extends over the rear of the plate-shaped licence plate support (3) and bears against the latter.

2. Multichamber light according to Claim 1, characterised in that the inside of the cover (17) and the rear of the housing (2) and/or of the licence plate support (3) have telescopically engaging cylindrical pins (18, 19).

3. Multichamber light according to Claim 2, characterised in that the pins (19) of the cover (17) have a hollow cylindrical construction and the pins (18), engaging with these pins (19), of the housing (2) and/or of the licence plate support (3) are attached to the cover (17).

4. Multichamber light according to Claim 3, characterised in that screws of which the head bears against the outside of the cover engage with the cylindrical pins (18) of the housing (2) and/or of the licence plate support (3).

5. Multichamber light according to Claim 3, characterised in that the end faces of the cylindrical pins (18) of the housing (2) and/or of the licence plate support (3) are welded directly to the cover (17) or to a disk (20) gripping the cover (17) from behind.

6. Multichamber light according to Claim 5, characterised in that the disks (20) are inserted in a depression on the outside of the cover (17) and extend with their outer surface flush with the outer surface of the cover (17).

7. Multichamber light according to one of Claims 1 to 6, characterised in that inserted in the bottom (7) of the housing (2) the multichamber light (1) has fastening screws (24), and stiffening ribs (26) are integrally formed on the regions on the rear of the housing (2) which adjoin the through holes (23) of said fastening screws.

8. Multichamber light according to Claim 7, characterised in that the through holes (23) for the fastening screws (24) are surrounded in each case on the rear of the housing (2) by an integrally formed sleeve (25) on the lateral surface of which there are formed the stiffening ribs (26), which extend radially upwards and bear against the inside of the cover (17) with their narrow side facing the cover (17).

9. Multichamber light according to one of Claims 1 to 8, characterised in that the mounting surface (12) for the licence plate lies in a plane, which is situated vertically in the mounted position of the light and extends at a distance behind the bottom (7) of the housing (2), and in that the lower side wall (11) of the housing (2), which has an inserted light window (15) for the licence plate, is approximately perpendicular to the mounting surface (12) for the licence plate.

10. Multichamber light according to one of Claims 1 to 9, characterised in that the junction of the outer and inner parts of the double wall (8, 9) of the housing (2) is formed by a ridge (10) which projects forwards over the transparent pane (5).

11. Multichamber light according to Claim 10, characterised in that the ridge (10) projects downwards over the lower side wall (11) of the housing (2).

12. Multichamber light according to one of Claims 1 to 11, characterised in that the ridge (10) of the housing (2) merges into a ridge (13) surrounding the licence plate support.

13. Multichamber light according to one of Claims 1 to 12, characterised in that the inner wall of the housing has an inwardly projecting step (28), which serves as mounting surface for the transparent pane (5).

14. Multichamber light according to Claim 13, characterised in that the mounting surface has a groove-shaped depression, and the groove-shaped depression serves as the bed for a seal (6).

15. Multichamber light according to one of Claims 1 to 14, characterised in that a multiple plug connection attached to the cover (17) projects into the cavity formed by the cover (17) and the housing (2).

16. Multichamber light according to one of Claims 1 to 15, characterised in that attaching means (31) for the licence plate are arranged in the cavity between the plate-shaped licence plate support (3) and the cover (17).

17. Multichamber light according to Claim 16, characterised in that the attaching means (31) consist of nuts fixed between the licence plate support and cover.

18. Multichamber light according to one of Claims 1 to 17, characterised in that intercrossing walls (21 and 22) which engage with one another are integrally formed on the inside of the cover (17) and on the rear of the housing (2) and/or of the licence plate support (3).

19. Multichamber light according to Claim 18, characterised in that the intercrossing and mutually engaging walls (21 and 22) consist of a single-walled cross (21) inserted between the walls of a double-walled cross (22).

20. Multichamber light according to one of Claims 1 to 19, characterised in that the cavity formed by the cover (17) and the housing (2) having the licence plate support (3) is connected to the ambient air through at least one opening (29) introduced in a low-lying region of the cavity, and to the light chambers through at least one opening (30) in the bottom (7) of the housing (2).

21. Multichamber light according to Claim 20, characterised in that the opening (30) is introduced in the bottom (7) of the housing (2) in the lower edge region of the bottom.

22. Multichamber light according to Claim 20 or 21, characterised in that the opening (29) of the cavity which is connected to the ambient air is introduced on the lower side of the cover (17) in the free edge thereof.

**Revendications**

1. Bloc optique multichambre comprenant un support de plaque d'immatriculation destiné à être monté sur la face arrière d'un véhicule, comprenant un boîtier fabriqué en matière plastique dans lequel sont encastrés les réflecteurs recouverts d'un diffuseur, et contre lequel est formé le support plat de la plaque d'immatriculation, le long de son côté qui est inférieur dans la position de montage du bloc optique multichambre, caractérisé par les caractéristiques suivantes :
   a) la paroi périphérique supérieure (8) et les deux parois périphériques latérales (9) du boîtier (2) sont réalisées à double paroi ;
   b) la partie extérieure de la double paroi (8 et 9) et la paroi périphérique inférieure (11) du boîtier (2) sont fixées au support de plaque d'immatriculation plat (3);
   c) le bord libre (16) de la partie extérieure de la double paroi (8, 9) et la face arrière du support de plaque d'immatriculation plat (3) sont contenus à peu près dans un même plan ;
   d) le bord libre (16) de la double paroi (8, 9) est recouvert d'un couvercle plat (17) qui s'étend également sur la face arrière du support de plaque d'immatriculation plat (3) et qui est appliqué contre cette face arrière.

2. Bloc optique multichambre selon la revendication 1, caractérisé en ce que la face interne du couvercle (17) et la face arrière du boîtier (2) et/ou du support de la plaque d'immatriculation (3) présentent des bossages cylindriques (18, 19) qui s'emboîtent télescopiquement les uns dans les autres.

3. Bloc optique multichambre selon la revendication 2, caractérisé en ce que les bossages (19) du couvercle (17) sont de configuration cylindrique creuse et les bossages (18) du boîtier (2) et/ou du support de plaque d'immatriculation (3) qui s'emboîtent dans ces bossages (19) sont fixés au couvercle (17).

4. Bloc optique multicouche selon la revendication 3, caractérisé en ce que, dans les bossages cylindriques (18) du boîtier (2) et/ou du support de plaque d'immatriculation (3), sont engagées des vis dont la tête est appliquée contre la face externe du couvercle.

5. Bloc optique multichambre selon la revendication 3, caractérisé en ce que les surfaces frontales des bossages cylindriques (18) du boîtier (2) et/ou du support de plaque d'immatriculation (3) sont directement soudées au couvercle (17) ou à des rondelles (20) placées derrière le couvercle (17).

6. Bloc optique multichambre selon la revendication 5, caractérisé en ce que les rondelles (20) sont emboîtés dans un renfoncement de la face externe du couvercle (17) et leur surface externe s'étend dans le même plan que la surface externe du couvercle (17)

7. Bloc optique multichambre selon une des revendications 1 à 6, caractérisé en ce que le bloc optique multichambre (1) présente des vis de fixation (24) encastrées dans le fond (7) du boîtier (2), et que des nervures raidisseuses (26) sont formées sur la face arrière du boîtier dans les régions adjacentes à leurs trous de passage (23).

8. Bloc optique multichambre selon la revendication 7, caractérisé en ce que chacun des trous de passage (23) prévus pour les vis de fixation (24) est entouré, sur la face arrière du boîtier (2) d'un manchon (25) venu de moulage et contre la surface latérale duquel sont formées les nervures raidisseuses (26), lesquelles s'étendent radialement vers l'extérieur et sont en appui contre la face interne du couvercle (17) par leur chant dirigé vers le couvercle.

9. Bloc optique multichambre selon une des revendications 1 à 8, caractérisé en ce que la surface (12) de portée recevant la plaque d'immatriculation se trouve dans un plan qui est orienté verticalement dans la position de montage du bloc optique et qui est situé à une certaine distance en arrière (7) du fond du boîtier (2), et en ce que la paroi périphérique inférieure (11) du boîtier (2), qui présente une fenêtre encastrée (15) pour l'éclairage de la plaque d'immatriculation est à peu près perpendiculaire à la surface de portée (12) recevant la plaque d'immatriculation.

10. Bloc optique multichambre selon une des revendications 1 à 9, caractérisé en ce que le raccordement entre la partie extérieure et la partie intérieure de la double paroi (8, 9) du boîtier est formé par un bourrelet (10) qui fait saillie vers l'avant au-delà du diffuseur (5).

11. Bloc optique multichambre selon la revendication 10, caractérisé en ce que le bourrelet (10) déborde vers le bas au-dessous de la paroi périphérique inférieure (11) du boîtier (2).

12. Bloc optique multichambre selon une des revendications 1 à 11, caractérisé en ce que le bourrelet (10) du boîtier (2) se termine dans un bourrelet (13) qui entoure le support de plaque d'immatriculation.

13. Bloc optique multichambre selon une des revendications 1 à 12, caractérisé en ce que la paroi interne du boîtier présente un épaulement (28) en retrait vers l'intérieur qui sert de surface de portée pour le diffuseur (5).

14. Bloc optique multichambre selon la revendication 13, caractérisé en ce que la surface de portée présente un renfoncement en forme de rigole et le renfoncement en forme de rigole sert de logement pour une garniture d'étanchéité (6).

15. Bloc optique multichambre selon une des revendications 1 à 14, caractérisé en ce qu'un connecteur multiple fixé au couvercle (17) fait issue dans la cavité délimitée par la couvercle (17) et le boîtier (2).

16. Bloc optique multichambre selon une des revendications 1 à 15, caractérisé en ce que, dans la cavité comprise entre le support de plaque d'immatriculation plat (3) et le couvercle (17) sont disposés des moyens de fixation (31) pour la plaque d'immatriculation.

17. Bloc optique multichambre selon la revendication 16, caractérisé en ce que les moyens de fixation (31) sont constitués par des écrous immobilisés entre le support de plaque d'immatriculation et le couvercle.

18. Bloc optique multichambre selon une des revendications 1 à 17, caractérisé en ce que, contre la face interne du couvercle (17) et contre la face arrière du boîtier (2) et/ou du support (3) de la plaque d'immatriculation, sont venues de matière des parois (21 et 22) en forme de croix qui s'emboîtent les unes dans les autres.

19. Bloc optique multichambre selon la revendication 18, caractérisé en ce que les parois en forme de croix (21 et 22) qui s'emboîtent les unes dans les autres sont constituées par une croix (21) à une paroi qui s'emboîte entre les parois d'une croix (22) à double paroi.

20. Bloc optique multichambre selon une des revendications 1 à 19, caractérisé en ce que la cavité délimitée par le couvercle (17) et le boîtier (2) complété du support de la plaque d'immatriculation (3) est en communication avec l'air extérieur par au moins une ouverture (29) pratiquée dans la région basse de la cavité et en communication avec les chambres des lampes par au moins une ouverture (30) pratiquée dans le fond (7) du boîtier (2).

21. Bloc optique multichambre selon la revendication 20, caractérisé en ce que l'ouverture (30) du fond (7) du boîtier (2), est pratiquée dans la région marginale inférieure du fond.

22. Bloc optique multichambre selon la revendication 20 ou 21, caractérisé en ce que, dans la face inférieure du couvercle (17), dans son bord libre, est pratiquée l'ouverture (29) de la cavité qui est en communication avec l'air extérieur.

# FIG 1

# FIG 2 Schnitt A-A

# FIG 3

Ansicht X